# EUROPEAN PATENT SPECIFICATION

(11) **EP 2 340 878 B1**
(45) Date of publication and mention of the grant of the patent: **15.09.2021**
(21) Application number: 10196833.7
(22) Date of filing: 23.12.2010
(51) Int. Cl.: A63F 13/213, A63F 13/335, A63F 13/215

(54) **Sensor device for a computer-controlled video entertainment system**
Sensorvorrichtung für ein computergesteuertes Videounterhaltungssystem
Dispositif de capteur pour système de divertissement vidéo commandé par ordinateur

(30) Priority: 30.12.2009 US 291021 P
(43) Date of publication of application: 06.07.2011
(73) Proprietor: Crytek GmbH, 60322 Frankfurt am Main (DE)
(72) Inventor: Yerli, Cevat, 60314 Frankfurt (DE)
(74) Representative: Schmidt, Steffen

(56) References cited:
- EP-A1- 1 391 226
- US-A1- 2009 258 703
- "Kinect", Wikipedia , 27 December 2009 (2009-12-27), XP002713877, Retrieved from the Internet: URL:http://en.wikipedia.org/w/index.php?ti tle=Kinect&oldid=334203061 [retrieved on 2013-09-27]
- "Nintendo DSi", Wikipedia , 29 December 2009 (2009-12-29), XP002714089, Retrieved from the Internet: URL:http://en.wikipedia.org/w/index.php?ti tle=Nintendo_DSi&oldid=334675438 [retrieved on 2013-10-01]
- "Max Value USB 2.0 10/100 Ethernet Adapter", Amazon , 23 February 2009 (2009-02-23), XP002714090, Retrieved from the Internet: URL:http://www.amazon.co.uk/Max-Value-USB- Ethernet-Adapter/dp/B000TV0640 [retrieved on 2013-10-02]
- Brier Dudley: "E3: New info on Microsoft's Natal -- how it works, multiplayer and PC versions", The Seattle Times , 3 June 2009 (2009-06-03), XP002714091, Retrieved from the Internet: URL:http://seattletimes.com/html/technolog ybrierdudleysblog/2009296568_e3_new_info_o n_microsofts_nata.html [retrieved on 2013-10-02]
- "Nintendo DS accessories", Wikipedia , 27 December 2009 (2009-12-27), XP002714092, Retrieved from the Internet: URL:http://en.wikipedia.org/w/index.php?ti tle=Nintendo_DS_accessories&oldid=33433543 9 [retrieved on 2013-10-02]
- Adam Hartley: "Does cloud gaming spell the end for consoles?", TechRadar , 3 February 2009 (2009-02-03), XP002713875, Retrieved from the Internet: URL:http://www.techradar.com/news/gaming/d oes-cloud-gaming-spell-the-end-for-console s-587605 [retrieved on 2013-09-26]
- "PlayStation Eye", Wikipedia , 10 December 2009 (2009-12-10), XP002713876, Retrieved from the Internet: URL:http://en.wikipedia.org/w/index.php?ti tle=PlayStation_Eye&oldid=330941174 [retrieved on 2013-09-27]
- None

## Description

### FIELD OF THE INVENTION

The present invention relates to a sensor device providing user-related input to a computer-controlled video entertainment system. In particular the invention relates to a sensor device for a computer-controlled gaming system to be used by at least one user wherein the sensor device can detect natural input such as physical gestures or speech. The invention further relates to a sensor device to be applied to a system for providing multimedia data for entertaining presentations to a plurality of user (audience) at home or outside in cinemas, theater rooms or the like. In this respect the present invention particularly relates to a sensor device for a system providing computer-based entertainment, like interactive video games or performing interactive movies or shows (so-called theater games) and interactive advertisement games.

### BACKGROUND OF INVENTION

Entertainment systems, such as video game systems or devices are well-known and are usually implemented by personal computers (PC) or game consoles which are controlled by at least one user. For controlling these systems the user is equipped with an input control device, such as a gamepad, joystick or mouse, which is linked to the PC or game console by cable. Modern game consoles provide wireless control in that the users are equipped with wireless control devices. The user activity is detected by a sensor device which usually comprises infrared sensing elements. These sensor devices have to be installed in the vicinity of the display device (TV set or monitor) and close to the user's position.

In US 2008/0039202 A1 such a game console with wireless sensor device is disclosed. The sensor device is linked via a cable to the game console which receives the sensor signals and processes these signals as input data for the running game. This means that the input signal and data processing is solely performed by said console, in particular by the processing unit of it. Thus the processing of the sensor signals depends on the layout and design of the processing unit which can have the effect that only a limited number of user control devices can be used. Therefore the system is not designed to be controlled by a large number of users or even by an audience. Moreover, the sensor device is exclusively designed to only work with said console. Thus there are still sensor devices cannot be used to operate with different systems. Finally, each user is equipped with a control device (wireless gamepad) which still has to be touched. But it would be desirable also to provide a contactless or touch-free control as well.

In the Wikipedia article "Nintendo DSi" a handheld game console is described, which includes two TFT-LCD screens and two digital cameras.

US 2009/258703 A1 discloses a technique for motion assessment of individuals using game controllers in connection with a multiplayer game, wherein the gameplay is based upon coordinated or directed physical interaction of multiple players.

Beside these drawbacks there are further deficiencies to be mentioned here:
In present systems, the computing, such as rendering, is performed by the processor of the used personal computer or game console. Consequently any update of hardware or software has to be made locally and involves high costs. Since many producers of consoles even keep the hardware and software protected, the users are forced to wait for new releases and have to buy them from the producers. In cinema gaming systems the hardware and software is normally implemented by a computer or server which is installed at the cinema or theater. Consequently a high invest has to be made at each cinema and any updating has to be made on site. This makes it harder and costly to frequently update or upgrade the systems and thus to stay in line with the developing technology of rendering computer graphics and movies. Moreover the known systems are not prepared to provide touch-free control equipment.

### SUMMARY OF INVENTION

The invention is defined by the appended claims, which provide for a sensor device according to claim 1, a consumer device according to claim 8, and a computer-controlled video entertainment system according to claim 9.

Thus the invention provides a sensor device for rich input, representing user control input, to be processed by at least on computing device, such as a console or remote server or even a server cloud which then provides entertainment output to at least one display device.

Further, the invention provides an easy-to-install sensor device which can be connected to at least one (local or remote) computing device and which can be installed near to or even within the display device and/or said computing device to detect user activities as rich inputs (gestures, speech, sound etc.) for the processed entertainment application.

Instead of being installed at or within a local computing device (e.g. a game console), the sensor device may be installed at or within a display device and be linked to a remote computing server or to a cloud of several servers by having direct access to an IP-based network, in particular to the Internet, for transmitting sensor signals or data derived thereof as user-related input data via the IP-based network to a remote computing device or server, preferably to a cloud of servers, which then process these input data for controlling the running entertainment program. The effort for realizing said sensor device in terms of hardware and software can be kept very low. The sensor device can be made simple, since it is mainly designed to detect user activities and to generate sensor signals which are directly transmitted as input data to the remote computer(s) or server (s). Because of the fact that the sensor device can directly be connected to the IP-based network (e.g. Internet) it can directly communicate with any IP-based computing device (gaming server or the like) being installed remotely and having powerful hardware and software to process the received input data. Thus there is no need to have a computer or game console being installed at the location of the user(s) . Moreover, the users even do not need to have more than a sensor device and a display device (TV set or monitor) when they want to enjoy and participate in an entertainment program. The entertainment or gaming program as such is remotely processed by said remote computer(s) under control of said input data. The computer(s) provide(s) output data (in particular video and audio) which are transmitted via the IP-based network back to the location of the user(s) and are then output by the display device (TV set, monitor) being connected to said IP-based network. This means that the users just need to have installed at their location (at home, in a cinema...) a display device which is connected to the Internet and said sensor device which also is connected to the Internet so that both devices can communicate with the remote computer(s) which run(s) the entertainment program. In a preferred embodiment there a several remote gaming computers which form a so-called server cloud. Thus many display devices and sensor devices (i.e. many homes or cinemas) can use the processing power of this server cloud. The installation costs for each user is therefore very low. Moreover, any software updating and/or hardware upgrading only needs to be made on this central server (s). The users need not to take care of updating and/or upgrading, but can always profit from the latest technology.

Thus the invention allows at least one user (player, consumer) to interactively play high-definition entertainment programs, such as games and television shows, using touch-free natural inputs, such as physical gestures and speech. With this invention, there is no need to use a handheld controller device for input (such as a keyboard, game controller, or remote control) or to purchase and install expensive additional hardware such as a game console or computer. Of course there is the option to still have handheld controllers which communicate with the sensor device, if this device is equipped with appropriate hard- and software. The invention is preferably realized as a server (cloud)-based entertainment system. The system mainly consists of a sensor device (which basically is sensor detecting and signal transmitting hardware) and a remote cloud computing and storage infrastructure.

In further embodiments the sensor device comprises a sensor module with at least one sensory element for detecting user activities, in particular natural user inputs such as physical gestures and/or speech, and for producing sensor signals. The sensor device may further comprise a processing unit for pre-processing said sensor signals to generate said user-related input data representing said detected user activities. The at least one sensor element can be an optical sensor for detecting physical gestures or appearance, an acoustical sensor for detecting user-produced speech, sound or noise and/or a thermal sensor for detecting physical presence or temperature.

In one embodiment the processing unit provides said user-related input data to said network interface for being transmitted via said IP-based network to the at least one computing device.

In another embodiment the processing unit receives from the sensor elements the sensor signals and pre-processes these signals to generate the input data, in particular by applying signal and/or data recognition to generate input data which represent recognized user-related input patterns, in particular gestures and/or speech commands. With respect to this, the processing unit may receive sensor signals which relate to a plurality of users and processes these signals to generate collective input data, in particular by applying signal and/or data recognition to generate collective input data which represent recognized multi-user or user-group-related input patterns, in particular collective gestures and/or collective speech commands.

In a further embodiment the sensor device further comprises a visual output or projection module, in particular a laser-based projection module, to output visual effects and/or information (as a feedback from the game server) to said at least one user. The sensor device may further comprise a wired or wireless interface/networking module to receive further input data from external user input devices, in particular form gamepads, joysticks, keypads, keyboards.

In one of the embodiments the system is a home environment gaming system. In another embodiment the system is theater gaming system and the method of providing the data also comprises the step of controlling a display device by the output data to present images, movies, advertisements and/or games to the at least one audience. The method can also comprise the step of receiving input data or signals from the at least one audience before providing the content data by at least one content server, wherein the content data is selected from a database in dependence of the input data or signals. The input data may come from the gamepads being installed at the seats for the audience. The method may also comprise the steps of: receiving input data or signals from the at least one audience before or during the presentation of images, movies, advertisements and/or games, wherein presentation of images, movies, advertisements and/or games audience is displayed in dependence of the input data or signals.

### BRIEF DESCRIPTION OF THE DRAWINGS

Further features and advantages of the present invention, as well as the structure and operation of various illustrative embodiments of the present invention, are described in more detail below with reference to the accompanying schematic drawings, wherein:
- Fig. 1: shows the architecture of a computer-controlled video entertainment system of the invention;
- Fig. 2: shows a first embodiment of a sensor device of the invention being connected with the remote cloud server(s) of the system;
- Fig. 3: shows a second embodiment of a sensor device of the invention being integrated into a consumer device;
- Fig. 4: shows a third embodiment of a sensor device of the invention being integrated into a mobile consumer device;
- Fig. 5: shows a fourth embodiment of a sensor device of the invention being connected to a consumer entertainment device;

### DETAILED DESCRIPTION OF PREFERRED EMBODIMENTS

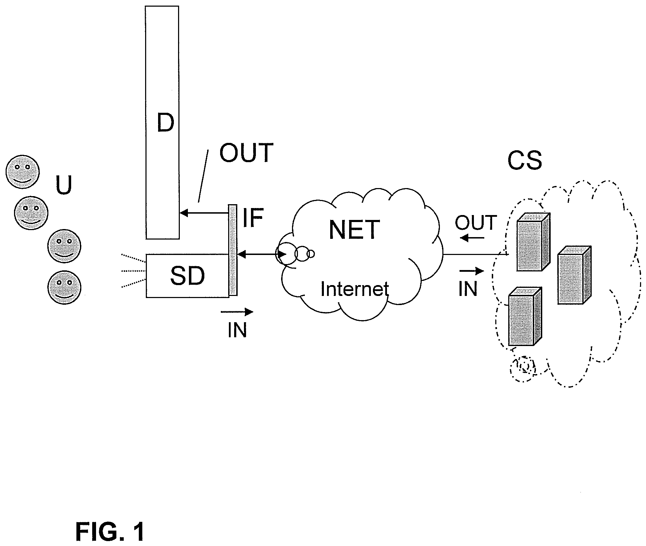

In FIG. 1 there is shown the architecture of a computer-controlled video entertainment system of the invention, the system being implemented as a multi-user gaming system for providing entertainment to a plurality of users U, such as members of a family at home or the members of an audience in a cinema or theatre.

At the users' site there is installed a display device D which can be e.g a flat panel LCD or a video projection screen, and a sensor device SD, both devices being linked via an interface IF to an IP-based network which is constituted by the Internet. Thus the display device D can receive output data OUT (video, audio) from (a) remote computing device(s) CS to be presented to the users U. The sensor device SD detects user activities to provide and transmit user-related input data IN via the Internet to said remote computing device(s) CS. In the shown embodiment there are several computing devices in form of a cluster or cloud of data processing severs which run the gaming program under control of said user-related input IN.

Since the cloud of servers CS is a very powerful processing resource which can quite easily be extended, the system can provide entertainment to a large number of users (hundreds, thousands or even much more) and/or to a plurality of locations (homes, cinemas, theatres...). Thus many single users and/or a variety of audiences can be provided with entertainment services. To simplify the explanation of the invention the configuration as shown in FIG. 1 relates to a single audience of users U.

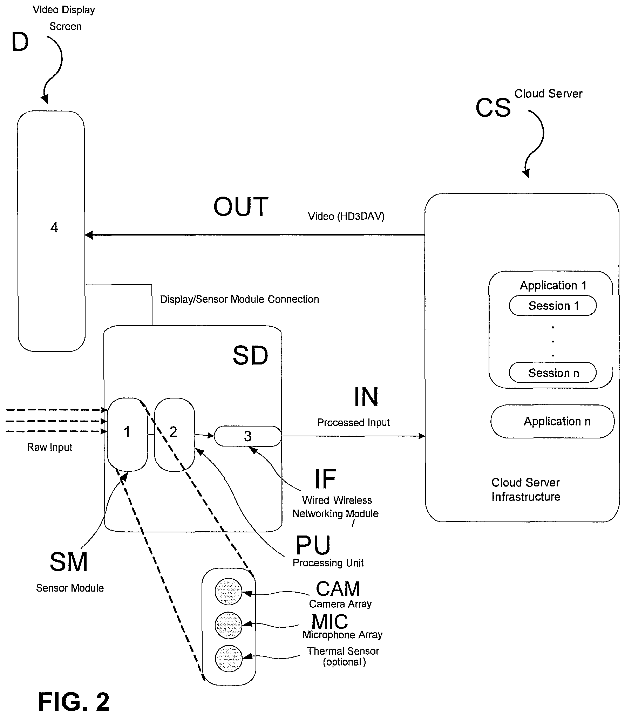

In FIGs 2 to 5 different embodiments of a sensor device SD for detecting user activities and for providing user-related input data IN are shown.

As a first embodiment FIG. 2 shows a sensor device SD comprising a sensor module SM having at least one sensor element, namely a camera CAM and a microphone MIC to detect user movements, physical gestures and/or user-produced speech, sounds etc.. Further to this the sensor device has a thermal sensor for detecting the physical presence or condition of the user(s) by detecting the body temperature(s). The sensor device SD is installed in the vicinity of the display device D and near the users to detect their activities. The sensor device SD further comprises a processing unit PU which can be implemented by a low-cost microprocessor to receive the sensor signals from the sensor elements CAM and MIC and to generate user-related input data IN which shall be transmitted to the remote cloud servers CS, one of which is shown in FIG. 2. In order to transmit the input data IN via an IP-based network (see FIG. 1) the sensor device SD also comprises an interface IF in form of a networking module which can be implemented by a wired or wireless Internet access module.

Thus the sensor device SD as shown in FIG. 2 can be realized as an universal and low-cost sensor device performing a touch-free detection to provide (in uplink direction) user-related input data IN to any remote computer or server CS which runs a entertainment or gaming program. The at least one server CS then produces output data OUT to be transmitted (in downlink direction) back to the users' location for being output at the display device D. The display device D may have its own interface for IP network access or may use the networking module as common interface IF to the Internet (also see FIG. 1) .

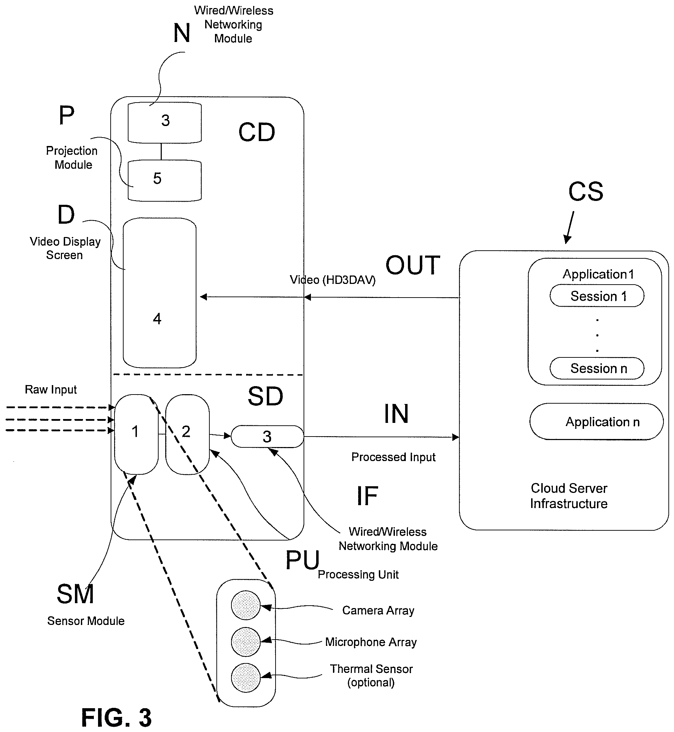

In FIG. 3 a second embodiment of the invention is shown wherein the sensor device SD is integrated into a consumer device CD, such as a TV set having flat screen display D. The consumer device can be any device for providing entertaining output to the user(s). The sensor device SD can also be part of a game console or any other computing device. In FIG. 3 the consumer device CD further comprises a projection module P for presenting visual output to the users such as laser beams to project feedback from the game server(s) CS. Further to this there is a wired or wireless network module N for receiving further input data from external user control devices such as keypads, gamepads, joysticks or the like. These data are then also transmitted via the interface module IF to the remote server (s) CS. As shown in FIG. 3 the sensor device SD and the display device D can be integrated in the same housing. This means that e.g. the sensor device SD can be part of a TV set or flat screen being equipped with an IP interface to be connected with a remote IP-based entertainment service provided by the servers CS. Thus the user(s) only need(s) to set up a single device and can instantly profit from the latest technology since all updates/upgrades are made at the remote site, i.e. on the servers CS.

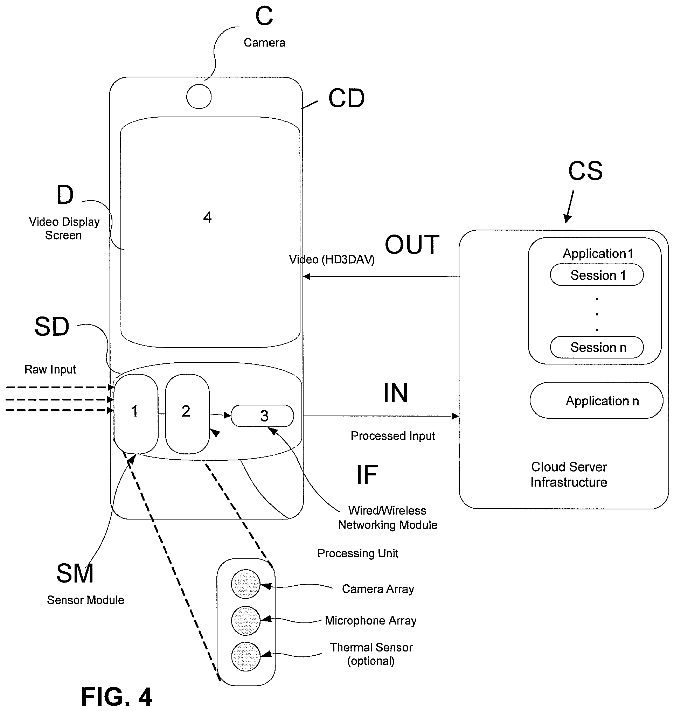

In FIG. 4 a third embodiment of the invention is shown wherein the sensor device SD is integrated into a mobile consumer device CD, such as a mobile phone or personal assistant having a display D. The sensor device can also be part of any other consumer device, such as a DVD and/or BlueRay player, a set top box.

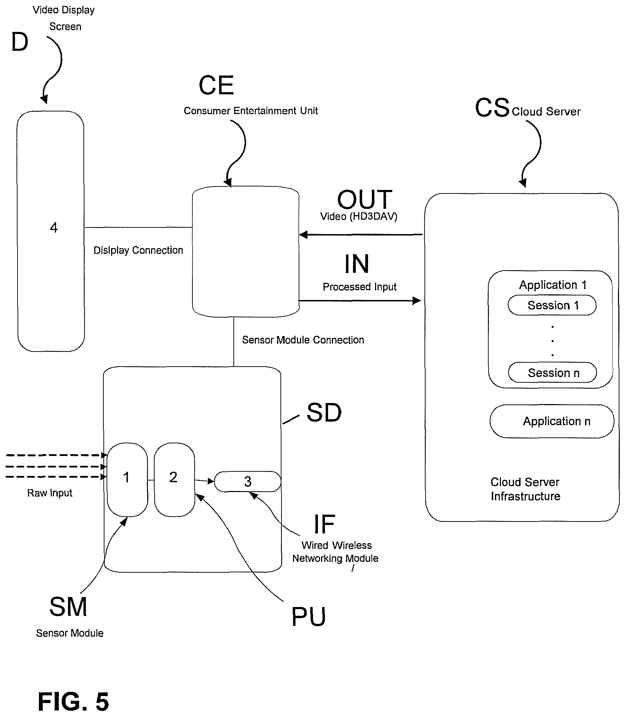

In FIG. 5 a fourth embodiment of the invention is shown wherein the sensor device SD built as a separate unit to be connected to any computing device such as the shown consumer entertainment device/unit CE.

By comparing FIGs. 2 to 5 it is clear that the sensor device SD can be a separate unit from the display screen or can be wholly integrated with the display screen or the consumer device to form a single unit. As shown in all the FIGs the sensor module SM can comprise multiple types of sensory elements. The preferred sensory elements are optical sensors, in particular two or more cameras, and at least one acoustical sensors such as microphones. Option sensory elements can also be incorporated, such as a thermal sensor.

By this design rich input data IN which relate to the detected user activities are provided to control the system and to enable the user(s) to interact with the entertainment program running on the remote server(s) CS. The user's raw unprocessed input (touchfree natural input such as a gesture) is detected by the sensor module SM. A plurality of input streams can be delivered by each user, either simultaneously or sequentially. The input streams detected by the sensor module SM can be passive or active. This means that the active input streams are generated through explicit actions by the user. These actions can consist of speech and physical gestures, for example. The passive input streams can consist of the user's physical appearance (e.g. height or facial features), thermal signature (e.g. body temperature), and other data.

All of the raw inputs are converted into user-related input data IN. These data can be pre-processed, e.g. by applying pattern recognition to detect specific gestures, speech or the like. The pre-processing stage can occur locally on the user's site, i.e. in the sensor device SD, or can occur remotely on the cloud computing infrastructure CS. During the pre-processing stage, various parameters such as position, timing, and user differentiation are resolved for each discrete input. As shown in FIG. 3 by network module N the sensor device can also receive further input data from external devices. This means that the user may also use an external input device such as a keyboard. Then the data input streams from such external devices would be received by the module N and could be combined and processed with the raw input streams detected by the sensor module SM. The combined and processed input could then be transmitted over the high-speed IP based data network NET to the cloud infrastructure CS for further processing and interpretation by the software entertainment or gaming application. After the user-related input IN is processed by the application, a response is computed and transmitted back as output OUT to the user over the high-speed data network NET. These output OUT preferably is a (downlink) data stream consisting primarily of high-definition video and audio. Additional data such as text, three-dimensional data, and stereoscopic three-dimensional data may also be transmitted.

This user-related input process repeats itself with a regular frequency (e.g. 30 times per second) throughout the course of the session to deliver a smooth coherent synchronized data stream to the user, typically manifested as one or more of the following: full-motion two-dimensional video, full-motion three-dimensional stereoscopic data, audio, and graphical user interface elements.

The cloud server infrastructure CS provides shared computing and storage resources for all users of the system. The system can thus support a massive number of simultaneous users who can interact with one another either in the same location on a single device, or from different locations with multiple devices. The cloud preferably is a cluster of actual servers that are connected in a self organizing form (said cloud) to distribute its performance in a dynamic and optimal way. This processing cloud needs not to provide the content as such. This can be provided by a further server or cloud (content cloud; not shown here) which represents an Online Game Catalogue providing all data for the desired games to be played by the audiences visiting the theaters. The content data is then transmitted to the processing cloud CS. After calculation these cloud servers CS send the output data OUT back to the client, i.e. to the display device D (at home or in the theater room).

In the field of games the most prominent data which have to be calculated are the visuals of the highest quality. By establishing a cloud of gaming servers CS the client has always the best performance guaranteed no matter what performance the local client is capable of. Depending on the application the service is not limited to graphics only. Any demanding process can be managed by the computing cloud CS. A preferred field of use is theater gaming. Here the small increase in lag (time lapse added due to the transport of the data forth and back) is negligible, and the demand for extreme performance makes it the best choice in terms of cost efficiency.

In summary the present invention relates to a computer-controlled video entertainment system and to a sensor device providing user-related input data to said system. The invention provides an easy-to-install sensor device having direct access to an IP-based network, in particular to the Internet, for transmitting sensor signals or data derived thereof as user-related input data via the IP-based network to a remote computing device or server, preferably to a cloud of servers, which then process these input data for controlling the running entertainment program. The sensor device can be made simple, since it is mainly designed to detect user activities and to generate sensor signals which are directly transmitted as input data to the remote computer(s) or server (s). Because of the fact that the sensor device can directly be connected to the IP-based network (e.g. Internet) it can directly communicate with any IP-based computing device (gaming server or the like) being installed remotely and having powerful hardware and software to process the received input data. Thus there is no need to have a computer or game console being installed at the location of the user(s). This means that the users just need to have installed at their location (at home, in a cinema...) a display device which is connected to the Internet and said sensor device which also is connected to the Internet so that both devices can communicate with the remote computer(s) which run(s) the entertainment program. The users need not to take care of updating and/or upgrading, but can always profit from the latest technology.

The invention, in particular the cloud being described here, can be used in all fields of providing interactive entertainment applications or content and also of providing non-interactive content. The invention can support Internet applications via any networks and/or media, including WiFi (Wireless Fidelity), BPL (broadband power line), LAN. WiMax (Worldwide Interoperability for Microwave Access) or any other standard technology. The mobile device of the present invention can operate to receive all kinds of interactive, non-interactive applications, such as movies and music, streamed from the cloud.

## Claims

1. A sensor device (SD) for a computer-controlled video entertainment system comprising a display device (D) for displaying video entertainment pictures to at least one user; and at least one computing device (CS) being installed remotely from said display device (D) and executing an entertainment software application for providing output data to be transmitted via an IP-based network (NET) to the display device (D) to display the video entertainment pictures; wherein the sensor device (SD) is adapted to be installed in the vicinity of or within said display device (D),
the sensor device (SD) is configured to provide user-related input data (IN) to the at least one remotely installed computing device (CS) to be processed by said entertainment software application, and wherein the sensor device (SD) comprises at least two optical sensory elements, at least one acoustic sensory element, and at least one interface (IF) for transmitting input data (IN) to said at least one remotely installed computing device (CS),
**characterized in that**
the sensor device (SD) is directly connected to the IP-based network (NET) via the at least one interface (IF).

2. The sensor device of claim 1, wherein said at least one interface (IF) of said sensor device is at least one of the following interfaces:
a wired or wireless network interface for the IP-based network (NET),
a wireless interface module, and
a wired interface connector for providing a wired or wireless connection between said sensor device and said at least one computing device being a single computing devices or a plurality of computing devices, in at least one game console, server and server cloud.

3. The sensor device of claim 1 or 2, wherein said sensor device comprises:
a sensor module (SM) comprising said sensory elements for detecting user activities, in particular natural user inputs including one or more of physical gestures by said at least two optical sensory elements, and speech by said at least one acoustic sensory element, and for producing sensor signals; and
a processing unit (PU) for processing said sensor signals to generate said user-related input data representing said detected user activities.

4. The sensor device of claim 3, wherein the processing unit (PU) provides said user-related input data to said network interface (IF).

5. The sensor device of claim 3 or 4, wherein said at two optical sensory elements and said at least one acoustic sensory element comprises at least one of an optical sensor for detecting physical gestures or appearance, an acoustical sensor for detecting user-produced speech, sound or noise, and a thermal sensor for detecting physical presence or temperature.

6. The sensor device of one of claims 3-5, wherein said processing unit (PU) pre-processes said sensor signals to generate said input data, by applying signal or data recognition to generate input data which represent recognized user-related input patterns.

7. The sensor device of claim 6, wherein said processing unit (PU) receives sensor signals which relate to a plurality of users and processes these signals to generate collective input data, by applying signal or data recognition to generate collective input data which represent recognized multi-user or user-group-related input patterns.

8. A consumer device (CD) comprising a sensor device (SD) according to one of the preceding claims and a display device (D) adapted to be used with at least one computing device installed remotely from said display device and executing an entertainment software application for providing output data to be transmitted via an IP-based network to the display device to display the video entertainment pictures.

9. A computer-controlled video entertainment system, the system comprising:
a display device (D) for displaying video entertainment pictures to at least one user;
at least one computing device (CS) being installed remotely from said display device and executing an entertainment software application for providing output data to be transmitted via an IP-based network to the display device to display the video entertainment pictures; and
a sensor device (SD) adapted to be installed in the vicinity of said display device (D) and said at least one user, the sensor device (D) configured to provide user-related input data to the at least one remotely installed computing device (CS) to be processed by said entertainment software application, the sensor device (SD) comprises a network interface (IF) for transmitting said input data via said IP-based network (NET) to said at least one remotely installed computing device (CS), **characterized in that** the sensor device (SD) is directly connected to the IP-based network (NET) via the at least one interface (IF).

10. The computer-controlled video entertainment system of claim 9, wherein the at least one computing device (CS) is constituted by a plurality of remotely installed computing servers (CS) being linked to each other to form a cluster or cloud of computing servers to form an overall cloud.

11. The computer-controlled video entertainment system of claim 10, wherein the computing servers (CS) are linked to each other via said IP-based network (NET), said IP-based network (NET) being constituted by the Internet.

12. The computer-controlled video entertainment system of one of claims 9-11,
wherein said network interface (IF) of said sensor device is a wired or wireless Internet module.

13. The computer-controlled video entertainment system of one of claims9-12,
wherein said sensor device (SD) comprises:
a sensor module (SM) with at least one sensory element for detecting user activities, including natural user inputs and for producing sensor signals; and
a processing unit (PU) for processing said sensor signals to generate said user-related input data representing said detected user activities.

14. The computer-controlled video entertainment system of claim 13, wherein the processing unit (PU) provides said user-related input data to said network interface (IF) for being transmitted via said IP-based network (NET) to said at least one computing device.

15. The computer-controlled video entertainment system of claim 14, wherein said at least one sensor element is at least one of an optical sensor for detecting physical gestures or appearance, an acoustical sensor for detecting user-produced speech, sound or noise, and a thermal sensor for detecting physical condition by temperature.

16. The computer-controlled video entertainment system of claim 14 or 15, wherein said processing unit (PU) receives from said sensor elements the sensor signals and:
generates raw input data which represent said sensor signals; and
pre-processes these signals to generate said input data, by applying signal or data recognition to generate input data which represent recognized user-related input patterns, including gestures and/or speech commands.

17. The computer-controlled video entertainment system of claim 16, wherein said processing unit (PU) receives sensor signals which relate to a plurality of users and processes these signals to generate collective input data, by applying signal or data recognition to generate collective input data which represent recognized multi-user or user-group-related input patterns, including collective gestures and/or collective speech commands.

18. The computer-controlled video entertainment system of one of claims 9-17,
wherein said sensor device (SD) further comprises one or more of:
a visual output or projection module to output visual data to said at least one user, including a laser-based projection allowing user activities; and
a wired or wireless interface/networking module to receive further input data from external user input devices, including one or more of gamepads, joysticks, keypads, and keyboards.

## Patentansprüche

1. Sensorvorrichtung (SD) für ein computergesteuertes Videounterhaltungssystem, umfassend eine Anzeigevorrichtung (D) zum Anzeigen von Videounterhaltungsbildern an mindestens einen Benutzer; und mindestens eine Rechenvorrichtung (CS), die entfernt von der Anzeigevorrichtung (D) installiert ist und eine Unterhaltungssoftwareanwendung zum Bereitstellen von Ausgabedaten ausführt, die über ein IP-basiertes Netzwerk (NET) an die Anzeigevorrichtung (D) übertragen werden sollen, um die Videounterhaltungsbilder anzuzeigen;
wobei die Sensorvorrichtung (SD) angepasst ist, um in der Nähe oder innerhalb der Anzeigevorrichtung (D) installiert zu werden,
die Sensorvorrichtung (SD) konfiguriert ist, um benutzerbezogene Eingabedaten (IN) für die mindestens eine entfernt installierte Rechenvorrichtung (CS) bereitzustellen, die von der Unterhaltungssoftwareanwendung verarbeitet werden soll, und wobei die Sensorvorrichtung (SD) mindestens zwei optische Sensorelemente, mindestens ein akustisches Sensorelement und mindestens eine Schnittstelle (IF) zum Übertragen von Eingabedaten (IN) an die mindestens eine entfernt installierte Rechenvorrichtung (CS) umfasst,
**dadurch gekennzeichnet, dass**
die Sensorvorrichtung (SD) über die mindestens eine Schnittstelle (IF) direkt mit dem IP-basierten Netzwerk (NET) verbunden ist.

2. Sensorvorrichtung nach Anspruch 1, wobei die mindestens eine Schnittstelle (IF) der Sensorvorrichtung mindestens eine der folgenden Schnittstellen ist:
eine drahtgebundene oder drahtlose Netzwerkschnittstelle für das IP-basierte Netzwerk (NET),
ein drahtloses Schnittstellenmodul und
einen drahtgebundenen Schnittstellenverbinder zum Bereitstellen einer drahtgebundenen oder drahtlosen Verbindung zwischen der Sensorvorrichtung und der mindestens einen Rechenvorrichtung, die eine einzelne Rechenvorrichtung oder mehrere Rechenvorrichtungen ist, in mindestens einer Spielekonsole, einem Server und einer Server-Cloud.

3. Sensorvorrichtung nach Anspruch 1 oder 2, wobei die Sensorvorrichtung umfasst:
ein Sensormodul (SM), das die Sensorelemente zum Erfassen von Benutzeraktivitäten umfasst, insbesondere natürlichen Benutzereingaben, die eine oder mehrere physische Gesten durch die mindestens zwei optischen Sensorelemente und Sprache durch das mindestens eine akustische Sensorelement beinhalten, und zum Erzeugen von Sensorsignalen; und
eine Verarbeitungseinheit (PU) zum Verarbeiten der Sensorsignale, um die benutzerbezogenen Eingabedaten zu erzeugen, die die erfassten Benutzeraktivitäten darstellen.

4. Sensorvorrichtung nach Anspruch 3, wobei die Verarbeitungseinheit (PU) die benutzerbezogenen Eingabedaten an die Netzwerkschnittstelle (IF) bereitstellt.

5. Sensoranordnung nach Anspruch 3 oder 4, wobei die mindestens zwei optischen Sensorelemente und das mindestens eine akustische Sensorelement mindestens einen optischen Sensor zum Erfassen physischer Gesten oder eines physischen Aussehens, einen akustischen Sensor zum Erfassen von benutzererzeugter Sprache, Schall oder Geräusch und einen thermischen Sensor zum Erfassen physischer Anwesenheit oder Temperatur umfassen.

6. Sensorvorrichtung nach einem der Ansprüche 3-5, wobei die Verarbeitungseinheit (PU) die Sensorsignale vorverarbeitet, um die Eingabedaten zu erzeugen, durch Anwenden von Signal- oder Datenerkennung, um Eingabedaten zu erzeugen, die erkannte benutzerbezogene Eingabemuster darstellen.

7. Sensorvorrichtung nach Anspruch 6, wobei die Verarbeitungseinheit (PU) Sensorsignale empfängt, die mehrere Benutzer betreffen, und diese Signale verarbeitet, um kollektive Eingabedaten zu erzeugen, durch Anwenden von Signal- oder Datenerkennung, um kollektive Eingabedaten zu erzeugen, die erkannte benutzerbezogene oder benutzergruppenbezogene Eingabemuster darstellen.

8. Verbrauchervorrichtung (CD), umfassend eine Sensorvorrichtung (SD) nach einem der vorhergehenden Ansprüche und eine Anzeigevorrichtung (D), die angepasst ist, um mit mindestens einer Rechenvorrichtung verwendet zu werden, die entfernt von der Anzeigevorrichtung installiert ist und eine Unterhaltungssoftwareanwendung zum Bereitstellen von Ausgabedaten ausführt, die über ein IP-basiertes Netzwerk an die Anzeigevorrichtung übertragen werden sollen, um die Videounterhaltungsbilder anzuzeigen.

9. Computergesteuertes Videounterhaltungssystem, wobei das System umfasst:
eine Anzeigevorrichtung (D) zum Anzeigen von Videounterhaltungsbildern für mindestens einen Benutzer;
mindestens eine Rechenvorrichtung (CS), die entfernt von der Anzeigevorrichtung installiert ist und eine Unterhaltungssoftwareanwendung zum Bereitstellen von Ausgabedaten ausführt, die über ein IP-basiertes Netzwerk an die Anzeigevorrichtung übertragen werden sollen, um die Videounterhaltungsbilder anzuzeigen; und
eine Sensorvorrichtung (SD), die angepasst ist, um in der Nähe der Anzeigevorrichtung (D) und des mindestens einen Benutzers installiert zu werden, wobei die Sensorvorrichtung (D) konfiguriert ist, um benutzerbezogene Eingabedaten für die mindestens eine entfernt installierte Rechenvorrichtung (CS) bereitzustellen, die von der Unterhaltungssoftwareanwendung verarbeitet werden soll, wobei die Sensorvorrichtung (SD) eine Netzwerkschnittstelle (IF) zum Übertragen der Eingabedaten über das IP-basierte Netzwerk (NET) an die mindestens eine entfernt installierte Rechenvorrichtung (CS) umfasst, **dadurch gekennzeichnet, dass** die Sensorvorrichtung (SD) über die mindestens eine Schnittstelle (IF) direkt mit dem IP-basierten Netzwerk (NET) verbunden ist.

10. Computergesteuertes Videounterhaltungssystem nach Anspruch 9, wobei die mindestens eine Rechenvorrichtung (CS) aus mehreren entfernt installierten Rechenservern (CS) gebildet ist, die miteinander verbunden sind, um ein Cluster oder eine Cloud von Rechenservern zu bilden, um eine Gesamtcloud zu bilden.

11. Computergesteuertes Videounterhaltungssystem nach Anspruch 10, wobei die Rechenserver (CS) über das IP-basierte Netzwerk (NET) miteinander verbunden sind, wobei das IP-basierte Netzwerk (NET) durch das Internet gebildet ist.

12. Computergesteuertes Videounterhaltungssystem nach einem der Ansprüche 9 bis 11, wobei die Netzwerkschnittstelle (IF) der Sensorvorrichtung ein drahtgebundenes oder drahtloses Internetmodul ist.

13. Computergesteuertes Videounterhaltungssystem nach einem der Ansprüche 9 bis 12, wobei die Sensorvorrichtung (SD) umfasst:
ein Sensormodul (SM) mit mindestens einem Sensorelement zum Erfassen von Benutzeraktivitäten, einschließlich natürlichen Benutzereingaben und zum Erzeugen von Sensorsignalen; und
eine Verarbeitungseinheit (PU) zum Verarbeiten der Sensorsignale, um die benutzerbezogenen Eingabedaten zu erzeugen, die die erfassten Benutzeraktivitäten darstellen.

14. Computergesteuertes Videounterhaltungssystem nach Anspruch 13, wobei die Verarbeitungseinheit (PU) die benutzerbezogenen Eingabedaten der Netzwerkschnittstelle (IF) bereitstellt, um über das IP-basierte Netzwerk (NET) an die mindestens eine Rechenvorrichtung übertragen zu werden.

15. Computergesteuertes Videounterhaltungssystem nach Anspruch 14, wobei das mindestens eine Sensorelement mindestens einer von einem optischen Sensor zum Erfassen physischer Gesten oder eines physischen Aussehens, einem akustischen Sensor zum Erfassen benutzererzeugter Sprache, Schall oder Geräusch und einem thermischen Sensor zum Erfassen physischer Bedingung durch Temperatur ist.

16. Computergesteuertes Videounterhaltungssystem nach Anspruch 14 oder 15, wobei die Verarbeitungseinheit (PU) von den Sensorelementen die Sensorsignale empfängt und:
Roheingabedaten erzeugt, die die Sensorsignale darstellen; und
diese Signale vorverarbeitet, um die Eingabedaten zu erzeugen, durch Anwenden von Signal- oder Datenerkennung, um Eingabedaten zu erzeugen, die erkannte benutzerbezogene Eingabemuster darstellen, einschließlich Gesten und/oder Sprachbefehle.

17. Computergesteuertes Videounterhaltungssystem nach Anspruch 16, wobei die Verarbeitungseinheit (PU) Sensorsignale empfängt, die mehrere Benutzer betreffen, und diese Signale verarbeitet, um kollektive Eingabedaten zu erzeugen, durch Anwenden von Signal- oder Datenerkennung, um kollektive Eingabedaten zu erzeugen, die erkannte benutzerbezogene oder benutzergruppenbezogene Eingabemuster darstellen, einschließlich kollektiver Gesten und/oder kollektiver Sprachbefehle.

18. Computergesteuertes Videounterhaltungssystem nach einem der Ansprüche 9 bis 17, wobei die Sensorvorrichtung (SD) ferner eines oder mehrere umfasst von:
einem visuellen Ausgabe- oder Projektionsmodul, um visuelle Daten an den mindestens einen Benutzer auszugeben, einschließlich einer laserbasierten Projektion, die Benutzeraktivitäten ermöglicht; und
einem drahtgebundenen oder drahtlosen Schnittstellen-/Vernetzungsmodul, um weitere Eingabedaten von externen Benutzereingabevorrichtungen zu empfangen, einschließlich eines oder mehrerer von Gamepads, Joysticks, Tastenfeldern und Tastaturen.

## Revendications

1. Dispositif de capteur (SD) pour un système de divertissement vidéo commandé par ordinateur comprenant un dispositif d'affichage (D) pour afficher des images de divertissement vidéo à au moins un utilisateur ; et au moins un dispositif informatique (CS) installé à distance dudit dispositif d'affichage (D) et exécutant une application logicielle de divertissement en vue de fournir des données de sortie à transmettre par l'intermédiaire d'un réseau basé sur IP (NET) au dispositif d'affichage (D) pour afficher les images de divertissement vidéo ; dans lequel le dispositif de capteur (SD) est apte à être installé à proximité ou à l'intérieur dudit dispositif d'affichage (D) ;
dans lequel le dispositif de capteur (SD) est configuré de manière à fournir des données d'entrée connexes à l'utilisateur (IN) audit au moins un dispositif informatique installé à distance (CS), afin qu'elles soient traitées par ladite application logicielle de divertissement, et dans lequel le dispositif de capteur (SD) comprend au moins deux éléments sensoriels optiques, au moins un élément sensoriel acoustique, et au moins une interface (IF) pour transmettre des données d'entrée (IN) audit au moins un dispositif informatique installé à distance (CS), **caractérisé en ce que** :
le dispositif de capteur (SD) est directement connecté au réseau basé sur IP (NET) par l'intermédiaire de ladite au moins une interface (IF).

2. Dispositif de capteur selon la revendication 1, dans lequel ladite au moins une interface (IF) dudit dispositif de capteur correspond au moins à l'une des interfaces suivantes :
une interface de réseau filaire ou sans fil pour le réseau basé sur IP (NET) ;
un module d'interface sans fil ; et
un connecteur d'interface filaire pour fournir une connexion filaire ou sans fil entre ledit dispositif de capteur et ledit au moins un dispositif informatique correspondant à un dispositif informatique unique ou à une pluralité de dispositifs informatiques, dans au moins une console de jeu, un serveur de jeu et un nuage de serveurs de jeu.

3. Dispositif de capteur selon la revendication 1 ou 2, dans lequel ledit dispositif de capteur comprend :
un module de capteur (SM) comprenant lesdits éléments sensoriels pour détecter des activités d'utilisateur, en particulier des entrées d'utilisateur naturelles incluant un ou plusieurs éléments parmi des gestes physiques par lesdits au moins deux éléments sensoriels optiques, et de la parole par ledit au moins un élément sensoriel acoustique, et pour produire des signaux de capteur ; et
une unité de traitement (PU) pour traiter lesdits signaux de capteur afin de générer lesdites données d'entrée connexes à l'utilisateur représentant lesdites activités d'utilisateur détectées.

4. Dispositif de capteur selon la revendication 3, dans lequel l'unité de traitement (PU) fournit lesdites données d'entrée connexes à l'utilisateur à ladite interface de réseau (IF).

5. Dispositif de capteur selon la revendication 3 ou 4, dans lequel lesdits au moins deux éléments sensoriels optiques et ledit au moins un élément sensoriel acoustique comprennent au moins l'un parmi un capteur optique pour détecter des gestes physiques ou une apparence physique, un capteur acoustique pour détecter une parole, un son ou un bruit produit par l'utilisateur, et un capteur thermique pour détecter une présence physique ou une température.

6. Dispositif de capteur selon l'une quelconque des revendications 3 à 5, dans lequel ladite unité de traitement (PU) prétraite lesdits signaux de capteur en vue de générer lesdites données d'entrée, en appliquant une reconnaissance de données ou de signal pour générer des données d'entrée qui représentent des motifs d'entrée reconnus connexes à l'utilisateur.

7. Dispositif de capteur selon la revendication 6, dans lequel ladite unité de traitement (PU) reçoit des signaux de capteur qui se rapportent à une pluralité d'utilisateurs et traite ces signaux en vue de générer des données d'entrée collectives, en appliquant une reconnaissance de données ou de signal en vue de générer des données d'entrée collectives qui représentent des motifs d'entrée reconnus connexes à des utilisateurs multiples ou à des groupes d'utilisateurs.

8. Dispositif grand public (CD) comprenant un dispositif de capteur (SD) selon l'une quelconque des revendications précédentes et un dispositif d'affichage (D) apte à être utilisé avec au moins un dispositif informatique installé à distance dudit dispositif d'affichage et exécutant une application logicielle de divertissement en vue de fournir des données de sortie à transmettre par l'intermédiaire d'un réseau basé sur IP au dispositif d'affichage afin d'afficher les images de divertissement vidéo.

9. Système de divertissement vidéo commandé par ordinateur, le système comprenant :
un dispositif d'affichage (D) destiné à afficher des images de divertissement vidéo à au moins un utilisateur ;
au moins un dispositif informatique (CS) installé à distance dudit dispositif d'affichage et exécutant une application logicielle de divertissement en vue de fournir des données de sortie à transmettre par l'intermédiaire d'un réseau basé sur IP au dispositif d'affichage, afin d'afficher les images de divertissement vidéo ; et
un dispositif de capteur (SD) apte à être installé à proximité dudit dispositif d'affichage (D) et dudit au moins un utilisateur, le dispositif de capteur (D) étant configuré de manière à fournir des données d'entrée connexes à l'utilisateur audit au moins un dispositif informatique (CS) installé à distance, afin qu'elles soient traitées par ladite application logicielle de divertissement, dans lequel le dispositif de capteur (SD) comprend une interface de réseau (IF) pour transmettre lesdites données d'entrée, par l'intermédiaire dudit réseau basé sur IP (NET), audit au moins un dispositif informatique installé à distance (CS), **caractérisé en ce que** le dispositif de capteur (SD) est directement connecté au réseau basé sur IP (NET) par l'intermédiaire de ladite au moins une interface (IF).

10. Système de divertissement vidéo commandé par ordinateur selon la revendication 9, dans lequel ledit au moins un dispositif informatique (CS) est constitué d'une pluralité de serveurs informatiques installés à distance (CS) liés les uns aux autres pour former une grappe ou un nuage de serveurs informatiques en vue de former un nuage global.

11. Système de divertissement vidéo commandé par ordinateur selon la revendication 10, dans lequel les serveurs informatiques (CS) sont liés les uns aux autres par l'intermédiaire dudit réseau basé sur IP (NET), ledit réseau basé sur IP (NET) étant constitué par Internet.

12. Système de divertissement vidéo commandé par ordinateur selon l'une quelconque des revendications 9 à 11, dans lequel ladite interface de réseau (IF) dudit dispositif de capteur est un module Internet filaire ou sans fil.

13. Système de divertissement vidéo commandé par ordinateur selon l'une quelconque des revendications 9 à 12, dans lequel ledit dispositif de capteur (SD) comprend :
un module de capteur (SM) avec au moins un élément sensoriel pour détecter des activités d'utilisateur, incluant des entrées d'utilisateur naturelles, et pour produire des signaux de capteur ; et
une unité de traitement (PU) destinée à traiter lesdits signaux de capteur en vue de générer lesdites données d'entrée connexes à l'utilisateur représentant lesdites activités d'utilisateur détectées.

14. Système de divertissement vidéo commandé par ordinateur selon la revendication 13, dans lequel l'unité de traitement (PU) fournit lesdites données d'entrée connexes à l'utilisateur à ladite interface de réseau (IF) afin qu'elles soient transmises par l'intermédiaire dudit réseau basé sur IP (NET) audit au moins un dispositif informatique.

15. Système de divertissement vidéo commandé par ordinateur selon la revendication 14, dans lequel ledit au moins un élément de capteur correspond à au moins l'un parmi un capteur optique pour détecter des gestes physiques ou une apparence physique, un capteur acoustique pour détecter une parole, un son ou un bruit produit par l'utilisateur, et un capteur thermique pour détecter une condition physique selon la température.

16. Système de divertissement vidéo commandé par ordinateur selon la revendication 14 ou 15, dans lequel ladite unité de traitement (PU) reçoit, en provenance desdits éléments de capteur, les signaux de capteur ; et
elle génère des données d'entrée brutes qui représentent lesdits signaux de capteur ; et
elle prétraite ces signaux pour générer lesdites données d'entrée, en appliquant une reconnaissance de données ou de signal pour générer des données d'entrée qui représentent des motifs d'entrée reconnus connexes à l'utilisateur, incluant des gestes et/ou des commandes vocales.

17. Système de divertissement vidéo commandé par ordinateur selon la revendication 16, dans lequel ladite unité de traitement (PU) reçoit des signaux de capteurs qui se rapportent à une pluralité d'utilisateurs, et traite ces signaux en vue de générer des données d'entrée collectives, en appliquant une reconnaissance de données ou de signal pour générer des données d'entrée collectives qui représentent des motifs d'entrée reconnus connexes à des utilisateurs multiples ou à des groupes d'utilisateurs, incluant des gestes collectifs et/ou des commandes vocales collectives.

18. Système de divertissement vidéo commandé par ordinateur selon l'une quelconque des revendications 9 à 17, dans lequel ledit dispositif de capteur (SD) comprend en outre un ou plusieurs des éléments ci-dessous :
un module de sortie ou de projection visuelle pour fournir en sortie des données visuelles audit au moins un utilisateur, incluant une projection à base de laser permettant des activités d'utilisateur ; et
un module d'interface / de mise en réseau filaire ou sans fil pour recevoir des données d'entrée supplémentaires provenant de dispositifs d'entrée utilisateur externes, incluant un ou plusieurs éléments parmi des manettes de jeu, des manches à balai, des pavés numériques et des claviers.
